Europäisches Patentamt

European Patent Office

Office européen des brevets

(19)

(11) Veröffentlichungsnummer: **0 247 214**
**B1**

(12) **EUROPÄISCHE PATENTSCHRIFT**

(45) Veröffentlichungstag der Patentschrift:
**25.10.89**

(21) Anmeldenummer: **86107089.4**

(22) Anmeldetag: **24.05.86**

(51) Int. Cl.⁴: **F16L 37/08**

(54) Steckarmatur zum lösbaren Anschluss einer Kunststoffleitung mit abgedichtetem Spannelement.

(43) Veröffentlichungstag der Anmeldung:
**02.12.87 Patentblatt 87/49**

(45) Bekanntmachung des Hinweises auf die Patenterteilung:
**25.10.89 Patentblatt 89/43**

(84) Benannte Vertragsstaaten:
**DE FR GB IT NL SE**

(56) Entgegenhaltungen:
**WO-A-85/05164**
**AU-B- 54 576**
**DE-C- 939 298**
**GB-A- 2 034 841**
**GB-A- 2 165 604**

(73) Patentinhaber: **Armaturenfabrik Hermann Voss GmbH & Co., D-5272 Wipperfürth(DE)**

(72) Erfinder: **Goller, Bernd, Attendorner Torstrasse 2, D-5272 Wipperfürth(DE)**

(74) Vertreter: **Patentanwälte Dr. Solf & Zapf, Schlossbleiche 20 Postfach 13 01 13, D-5600 Wuppertal 1(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Steckarmatur zum schnellen und lösbaren Anschluß einer Rohr- und/oder Schlauchleitung mit außen glattem Endbereich, insbesondere einer Kunststoffleitung, bestehend aus einem Gehäuse mit einer Bohrung, die einendig eine Einstecköffnung für ein Ende der Leitung bildet, und einem innerhalb der Bohrung des Gehäuses axial verschieblich angeordneten, hülsenförmigen Spannelement, das an seinem der Einstecköffnung abgekehrten Ende radial nach innen gerichtete Haltezähne aufweist und durch mindestens einen axialen Schlitz radial federelastisch ist, wobei die Gehäusebohrung einen Innenkonus aufweist, der bei axialer Verschiebung des Spannelementes in Richtung der Einstecköffnung zur klemmenden Halterung der Leitung mit einem Außenkonus des Spannelementes zusammenwirkt, und wobei das Spannelement an seinem der Einstecköffnung zugekehrten Ende radial nach außen gegen die Wandung der Bohrung sowie radial nach innen gegen die Leitung über jeweils einen Dichtring abgedichtet ist.

Bei einer aus der EP–A 0 003 746 bekannten Steckarmatur ist das Gehäuse auf seiner der Einstecköffnung gegenüberliegenden Seite mit einem Anschlußstutzen verbunden, der eine mit der Gehäusebohrung fluchtende Durchgangsbohrung aufweist. An seinem dem Gehäuse abgekehrten Ende weist der Anschlußstutzen ein Außengewinde auf, das in eine Gewindebohrung z.B. eines Gerätegehäuses einschraubbar ist. Die Leitung ist in die Einstecköffnung des Gehäuses durch das Spannelement hindurch und in die Bohrung des Anschlußstutzens einsteckbar. In der Bohrungswandung des Stutzens ist eine Dichtungskammer ausgebildet, in der eine Ringdichtung angeordnet ist, die die Bohrungswandung gegen die Leitungsoberfläche derart abdichtet, daß kein Medium an der Leitung vorbei nach außen dringen kann. Diese Ausbildung hat jedoch den Nachteil, daß das Spannelement innerhalb des Gehäuses ohne jegliche Abdichtung geführt ist, so daß im Bereich der Einstecköffnung Schmutz sowohl in den Spalt zwischen dem Gehäuse und dem Spannelement, als auch in den Spalt zwischen dem Spannelement und der Leitung eindringen kann. Dieser Schmutz kann sich vibrationsbedingt im Bereich der Haltezähne zwischen das Spannelement und die Leitung setzen, was zum Lösen der Leitung führt. Weiterhin ist durch den eintretenden Schmutz auch ein derartiges Verklemmen des Spannelementes in dem Gehäuse denkbar, daß ein Lösen der Leitung nicht mehr möglich ist. Aus diesem Grund ist die bekannte Steckarmatur für solche Anwendungsfälle weniger gut geeignet, bei denen sie Verschmutzungen insbesondere bei gleichzeitigen Vibrationen ausgesetzt ist, was vor allem ihre Verwendung in Lastkraftwagen aus Sicherheitsgründen ausschließt.

Aus der GB–A 2 156 604 ist eine gattungsgemäße Steckarmatur bekannt, bei der der beschriebene Nachteil im wesentlichen dadurch beseitigt ist, daß das dort vorhandene Spannelement (Klemmhülse) sowohl radial nach außen gegen die Wandung der Gehäusebohrung als auch radial nach innen gegen eine einzusteckende Rohrleitung jeweils über einen Dichtring abgedichtet ist. Dabei bewirkt der innere, auf der Rohrleitung zur Auflage kommende Dichtring durch eine Reibungsmitnahme auch die zur klemmenden Halterung der Leitung erforderliche, axiale Verschiebung des Spannelementes beim Einschieben der Rohrleitung. Allerdings könnten bei dieser Axialbewegung des Spannelementes die Dichtringe verrutschen, wodurch ihre Dichtfunktion zumindest verschlechtert werden könnte.

Der vorliegenden Erfindung liegt daher die Aufgabe zugrunde, die gattungsgemäße Steckarmatur derart zu verbessern, daß auch bei extremen Verschmutzungs- und Vibrationsverhältnissen stets eine einwandfreie Funktion, d.h. sowohl eine sichere Halterung der Leitung durch das Spannelement als auch eine Lösbarkeit der Leitung gewährleistet ist.

Erfindungsgemäß wird dies dadurch erreicht, daß die Dichtringe mit dem Spannelement stoffschlüssig verbunden sind. Durch diese vorteilhafte Maßnahme erfolgt stets, d.h. unter allen Bedingungen, im Bereich der Einstecköffnung eine besonders wirksame Abdichtung gegen ein Austreten des von der Leitung geführten Mediums sowie gleichzeitig durch sehr sichere Abdichtung der Spalte zwischen der Gehäusebohrung und dem Spannelement einerseits und dem Spannelement und der Leitung andererseits, eine Abdichtung gegen vorhandenen Schmutz, dessen Eindringen in den Bereich der Haltezähne des Spannelementes so wirksam verhindert wird.

Weitere vorteilhafte Ausgestaltungsmerkmale der Erfindung sind in den Unteransprüchen enthalten.

Anhand der Zeichnung soll im folgenden die Erfindung beispielhaft näher erläutert werden. Dabei zeigen:

Fig. 1 einen Längsschnitt durch eine erste Ausführungsform einer erfindungsgemäßen Steckarmatur in der Haltestellung des Spannelementes und

Fig. 2 einen Längsschnitt durch eine zweite Ausführungsform einer erfindungsgemäßen Steckarmatur in der Montage- bzw. Demontagestellung des Spannelementes.

Eine Steckarmatur nach der Erfindung besteht aus einem Gehäuse 1 mit einer Bohrung 2, die einendig eine Einstecköffnung 3 für ein Ende einer Rohr- und/oder Schlauchleitung 4 bildet. Innerhalb der Gehäusebohrung 2 ist ein hülsenförmiges Spannelement 5 axial, d. h. in Richtung der Bohrungsachse 6, verschieblich angeordnet. An seinem der Einstecköffnung 3 abgekehrten Ende 7 weist das Spannelement 5 radial nach innen gerichtete Haltezähne 9 auf und ist durch mindestens einen axialen Schlitz radial federelastisch. In den dargestellten Ausführungsbeispielen der Erfindung besteht das Spannelement 5 vorzugsweise aus Kunststoff oder Metall und weist einen im Bereich der Einstecköffnung 3 angeordneten Trägerring 11 sowie mehrere an dem Trägerring 11 angebundene, durch axiale Schlitze voneinander getrennte, sich axial in die Bohrung 2 erstreckende Klemmarme 12 auf. Die Gehäusebohrung 2 weist einen Innenkonus 15 auf, der bei axialer Verschiebung des Spannelementes 5 in Richtung der Einstecköffnung 3, d. h. bei Zug an der Leitung 4 in Pfeilrichtung 16, zur klemmenden Halterung der Leitung 4 mit einem Außenkonus 17 des Spannelementes 5, d. h. der Klemmarme 12, zusammenwirkt.

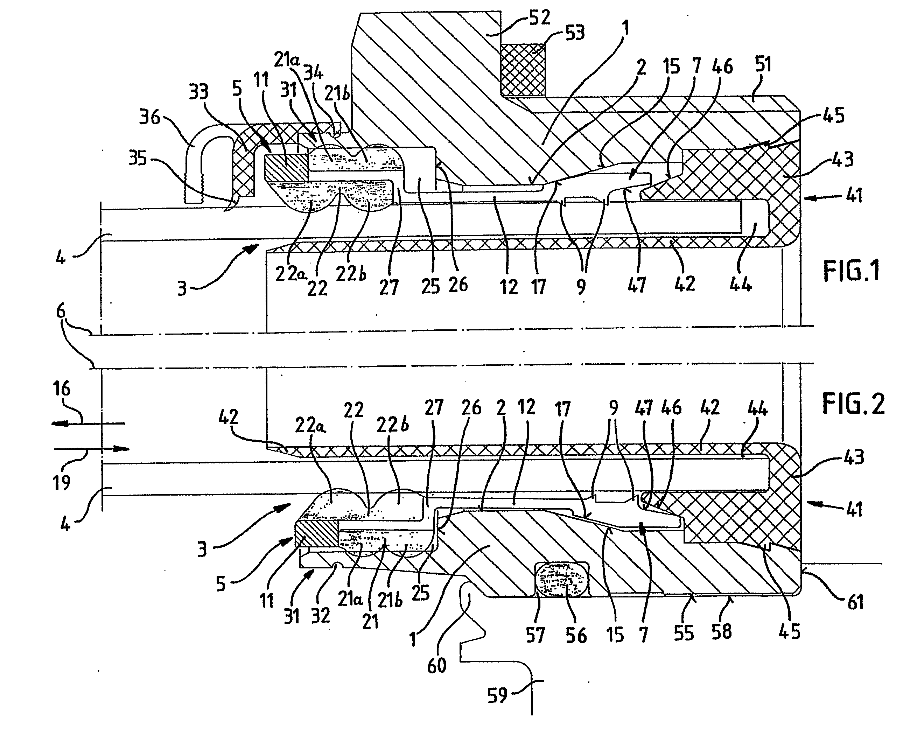

In Fig. 1 ist die Stellung der Klemmarme 12 Halterung der Leitung 4 dargestellt, wobei die Haltezähne 9 in die Oberfläche der Leitung 4 eingreifen. Um eine sichere Halterung der Leitung 4 gegen Herausziehen in Pfeilrichtung 16 zu gewährleisten, sind die Haltezähne 9 in üblicher Weise widerhakenartig ausgebildet. In Fig. 2 ist demgegenüber die Montage- bzw. Demontagestellung der Klemmarme 12 dargestellt, die ein Einstecken der Leitung 4 in die Einstecköffnung 3 in Pfeilrichtung 19 sowie ein Herausziehen der Leitung 4 in Pfeilrichtung 16 gestattet.

Das Spannelement 5 ist an seinem der Einstecköffnung 3 zugekehrten Ende radial nach außen gegen die Wandung der Bohrung 2 sowie radial nach innen gegen die Leitung 4 abgedichtet. Hierzu besitzt das Spannelement 5 in diesem Bereich einen sich radial nach außen erstreckenden Dichtring 21 sowie einen sich radial nach innen erstreckenden Dichtring 22. Die Dichtringe 21,22 sind mit dem Spannelement 5 stoffschlüssig verbunden. Sie können z.B. verklebt, insbesondere aber aufvulkanisiert sein.

In den dargestellten Ausführungsbeispielen der Erfindung weisen dei Dichtringe 21,22 jeweils zwei Ringwulste 21a, 21 b; 22a, 22b auf, wobei die beiden Dichtringe 21 und 22 in axialer Richtung versetzt zueinander angeordnet sein können.

Die Gehäusebohrung 2 weist in ihrem sich an die Einstecköffnung anschließenden Bereich eine abgestufte, erweiterte Bohrung auf, die eine Dichtungskammer 25 zur Aufnahme der Dichtringe 21,22 bildet. Die Dichtungskammer 25 geht über eine Stufe 26 in die Bohrung 2 über.

Bei der oben bereits beschriebenene Ausbildung des Spannelementes 5 ist es vorteilhaft, wenn die Dichtringe 21, 22 auf den Trägerring 11 sowie ebenfalls auf die Klemmarme 12 in deren sich an den Trägerring 11 anschließendem Bereich aufvulkanisiert und miteinander durch die zwischen den Klemmarmen 12 liegenden Schlitze hindurch verbunden sind. Bei dieser Ausbildung kann von einer Einstückigkeit der Dichtringe 21,22 gesprochen werden, da sie durch die Schlitze des Spannelementes 5 hindurch ineinander übergehen. Diese Ausbildung ist auch insofern von Vorteil, daß die in ihrem Anbindungsbereich an den Trägerring 11 von den Dichtungen 21,22 umschlossenen Klemmarme 12 aufgrund der Elastizität des Dichtungsmaterials - zweckmäßigerweise Gummi - eine gesteigerte Radialelastizität aufweisen.

Wie in der Zeichnung dargestellt, verlaufen die von den Dichtungen 21,22 umschlossenenen Bereiche der Klemmarme 12 etwa mittig durch die Dichtungskammer 25 hindurch. Vor der durch die Dichtungskammer 25 gebildeten Bohrungsstufe 26 weisen die Klemmarme 12 einen radial nach innen verlaufenden Übergangsbereich 27 auf, der in einen axial angeordneten Endbereich übergeht, der mit geringem Abstand von der Wandung der Bohrung 2 durch diese hindurch bis zu seinem Ende 7 verläuft.

Das Gehäuse 1 weist im Bereich der Einstecköffnung 3 einen Abschnitt 31 mit zylindrischer Außenfläche auf, in der eine Ringnut 32 (Fig. 2) ausgebildet ist. Auf den zylindrischen Abschnitt 31 ist vorteilhafterweise eine ringförmige, die Leitung 4 umschließende Abdeckkappe 33 (Fig. 1) aufsteckbar, die auf ihrer Innenfläche einen Ringsteg 34 aufweist, der in die Ringnut 32 rastend eingreift. Dabei liegt die Abdeckkappe 33 über eine Ringdichtlippe 35 auf der Oberfläche der Leitung 4 auf. Die Abdeckkappe 33 deckt vorteilhafterweise einsteckseitig das Spannelement 5 ab, so daß ein unbefugtes Lösen der Leitung 4 verhindert wird. Zum Lösen der Leitung 4 wird nämlich - wie im folgenden noch näher erläutert wird - das Spannelement 5 axial in die Bohrung 2 hineinverschoben. Weiterhin stellt die Abdeckkappe 33 eine zusätzliche Abdichtung gegen Verschmutzung dar. Zum Aufstecken und Abziehen der Abdeckkappe 33 weist diese zweckmäßigerweise an ihrer äußeren Oberfläche mindestens ein Handhabungs-Griffstück 36 auf.

Auf ihrer der Einstecköffnung 3 gegenüberliegenden Seite ist die Bohrung 2 ebenfalls durchmessererweitert. In dieser Durchmessererweiterung der Bohrung 2 ist ein vorzugsweise aus Kunststoff bestehender Einsatz 41 kraft- und/oder formschlüssig gehalten, der eine zylindrische, sich zumindest bis zur Einstecköffnung 3 durch die Bohrung 2 erstreckende Stützhülse 42 mit einem geringfügig kleineren Außendurchmesser als der Innendurchmesser der Leitung 4 aufweist. Die Stützhülse 42 geht auf ihrer der Einstecköffnung 3 abgewandten Seite radial nach außen in einen Haltering 43 über, wobei zwischen der Stützhülse 42 und dem Haltering 43 ein in Richtung der Einstecköffnung 3 offener, ringförmiger Hohlraum 44 zur Aufnahme des Endes der Leitung 4 gebildet ist. Dabei ist es zweckmäßig, wenn der Haltering 43 des Einsatzes 41 in dem Gehäuse 1 über eine Schnappverbindung 45 formschlüssig gehalten ist. Hierzu weist der Haltering auf seiner äußeren Oberfläche einen Ringsteg auf, der in eine entsprechende Ringnut der erweiterten Bohrung einrastet. Der Ringsteg und die Ringnut weisen ein aneinander angepaßtes Querschnittsprofil auf, das in der Form eines rechtwinkligen Dreieckes ausgebildet ist, dessen eine, der Einstecköffnung 3 abkehrte Kathete senkrecht zur Bohrungsachse 6 angeordnet ist. Dadurch, daß die Stützhülse 42 sich bis mindestens zur Einstecköffnung 3 erstreckt, unterstützt sie die Leitung 4 derart, daß eine radiale Verformung der Leitung 4 durch den inneren Dichtring 22 ausgeschlossen ist. Hierdurch wird in diesem Bereich eine sehr gute Abdichtung erreicht.

Vorteilhafterweise weist der Haltering 43 auf seiner in Richtung der Einstecköffnung 3 in die Bohrung 2 ragenden Seite einen Außenkonus 46 auf, der mit einem Innenkonus 47 des Spannelementes 5, d. h. der Klemmarme 12, zum Lösen der Leitung 4 zusammenwirkt. Wie oben bereits angedeutet, kann durch diese Ausbildung die Leitung 4 gelöst wer-

den, indem das Spannelement 5 axial in die Bohrung 2 hineinverschoben wird, was z. B. durch Druck mit einem Schraubendreher gegen den Stützring 11 leicht zu bewerkstelligen ist. Die Klemmarme 12 werden elastisch aus ihrer Haltestellung (Fig. 1) durch die Konusflächen 46,47 radial nach außen gedrängt, wodurch die Haltezähne 9 die Leitung 4 freigeben (Fig. 2).

Zur Montage der erfindungsgemäßen Steckarmatur in einer Bohrung z. B. eines Gerätegehäuses oder dergleichen, sind zwei alternative Ausführungsformen dargestellt. Gemäß Fig. 1 weist das Gehäuse 1 an seinem der Einstecköffnung 3 gegenüberliegenden Ende ein Außengewinde 51 sowie eine sich an das Außengewinde 51 anschließenden Außensechskant 52 auf und ist in eine Gewindebohrung eines beliebigen Anschlußteils (nicht dargestellt) unter Zwischenlage einer Ringdichtung 53 einschraubbar.

Gemäß Fig. 2 weist das Gehäuse 1 eine zylindrische Außenfläche 55 auf und ist unter Einschluß einer Ringdichtung 56, die in einer Ringnut 57 des Gehäuses 1 angeordnet ist, in eine Paßbohrung 58 eines Anschlußteils 59 einsetzbar und durch eine Umbördelung 60 des Anschlußteils 59 befestigbar. Dabei ist es vorteilhaft, wenn das Gehäuse 1 mit seiner der Einstecköffnung 3 gegenüberliegenden Stirnseite an einer Bohrungsstufe 61 des Anschlußteils 59 anliegt.

Die Ausbildung des Spannelementes 5 bringt in Verbindung mit seiner Abdichtung den zusätzlichen Vorteil mit sich, daß bei axialem Zug an der Leitung 4 in Pfeilrichtung 16 eine Reibungsmitnahme des Spannelementes 5 über den Dichtring 22 erfolgt, was durch das Zusammenwirken der Konusflächen 15,17 zu einer festen Halterung der Leitung 4 führt.

**Patentansprüche**

1. Steckarmatur zum schnellen und lösbaren Anschluß einer Rohr- und/oder Schlauchleitung (4) mit außen glattem Endbereich, insbesondere einer Kunststoffleitung, bestehend aus einem Gehäuse (1) mit einer Bohrung (2), die einendig eine Einstecköffnung (3) für ein Ende der Leitung (4) bildet, und einem innerhalb der Bohrung (2) des Gehäuses (1) axial verschieblich angeordneten, hülsenförmigen Spannelement (5), das an seinem der Einstecköffnung (3) abgekehrten Ende (7) radial nach innen gerichtete Haltezähne (9) aufweist und durch mindestens einen axialen Schlitz radial federelastisch ist, wobei die Gehäusebohrung (2) einen Innenkonus (15) aufweist, der bei axialer Verschiebung des Spannelementes (5) in Richtung der Einstecköffnung (3) zur klemmenden Halterung der Leitung (4) mit einem Außenkonus (17) des Spannelementes (5) zusammenwirkt, und wobei das Spannelement (5) an seinem der Einstecköffnung (3) zugekehrten Ende radial nach außen gegen die Wandung der Bohrung (2) sowie radial nach innen gegen die Leitung (4) über jeweils einen Dichtring (21, 22) abgedichtet ist, dadurch gekennzeichnet, daß die Dichtringe (21, 22) mit dem Spannelement (5) stoffschlüssig verbunden sind.

2. Steckarmatur nach Anspruch 1, dadurch gekennzeichnet, daß die Dichtringe (21, 22) auf das Spannelement (5) aufvulkanisiert sind.

3. Steckarmatur nach Anspruch 1 oder 2, dadurch gekennzeichnet, daß die Dichtringe (21, 22) jeweils mindestens zwei Ringwulste (21a, 21b; 22a, 22b) aufweisen.

4. Steckarmatur nach einem oder mehreren der Ansprüche 1 bis 3, dadurch gekennzeichnet, daß die Dichtringe (21, 22) in axialer Richtung versetzt zueinander angeordnet sind.

5. Steckarmatur nach einem oder mehreren der Anprüche 1 bis 4, dadurch gekennzeichnet, daß die Gehäusebohrung (2) in ihrem sich an die Einstecköffnung (3) anschließenden Bereich eine Dichtungskammer (25) mit vergrößertem Durchmesser zur Aufnahme der Dichtringe (21, 22) aufweist.

6. Steckarmatur nach einem oder mehreren der Ansprüche 1 bis 5, dadurch gekennzeichnet, daß das vorzugsweise aus Kunststoff oder Metall bestehende Spannelement (5) aus einem im Bereich der Einstecköffnung (3) angeordneten Trägerring (11) sowie mehreren an dem Trägerring (11) angebundenen, durch axiale Schlitze voneinander getrennten, sich axial in die Bohrung (2) erstreckenden Klemmarmen (12) besteht.

7. Steckarmatur nach Anspruch 6, dadurch gekennzeichnet, daß die Dichtringe (21, 22) auf den Trägerring (11) sowie vorzugsweise auf die Klemmarme (12) in deren sich an den Trägerring (11) anschließendem Bereich aufvulkanisiert und miteinander durch die zwischen den Klemmarmen (12) liegenden Schlitze hindurch verbunden sind.

8. Steckarmatur nach einem oder mehreren der Ansprüche 1 bis 7, dadurch gekennzeichnet, daß das Gehäuse (1) im Bereich der Einstecköffnung (3) einen Abschnitt (31) mit zylindrischer Außenfläche aufweist, in der eine Ringnut (32) ausgebildet ist, und daß auf den zylindrischen Abschnitt (31) eine ringförmige, die Leitung (4) umschließende Abdeckkappe (33) aufsteckbar ist, die auf ihrer Innenfläche einen Ringsteg (34) aufweist, der in die Ringnut (32) rastend eingreift.

9. Steckarmatur nach Anspruch 8, dadurch gekennzeichnet, daß die Abdeckkappe (33) über eine Ringdichtlippe (35) auf der Leitung (4) aufliegt.

10. Steckarmatur nach Anspruch 8 oder 9, dadurch gekennzeichnet, daß die Abdeckkappe (33) an ihrer äußeren Oberfläche mindestens ein Handhabungs-Griffstück (36) aufweist.

11. Steckarmatur nach einem oder mehreren der Ansprüche 1 bis 10, gekennzeichnet durch einen sich in der Gehäusebohrung (2) auf ihrer der Einstecköffnung (3) gegenüberliegenden, durchmessererweiterten Seite kraft- und/oder formschlüssig gehalterten, vorzugsweise aus Kunststoff bestehenden Einsatz (41), der eine zylindrische, sich zumindest bis zur Einstecköffnung (3) durch die Bohrung (2) erstreckende Stützhülse (42) mit einem geringfügig kleineren Außendurchmesser als der Innendurchmesser der Leitung (4) aufweist.

12. Steckarmaturen nach Anspruch 11, dadurch gekennzeichnet, daß die Stützhülse (42) auf ihrer der Einstecköffnung (3) abgewandten Seite radial nach außen in einen Haltering (43) übergeht, wobei zwischen der Stützhülse (42) und dem Haltering (43) ein in Richtung der Einstecköffnung (3) offener, ringförmiger Hohlraum (44) zur Aufnahme des Endes der Leitung (4) gebildet ist.

13. Steckarmatur nach Anspruch 12, dadurch gekennzeichnet, daß der Haltering (43) des Einsatzes (41) in dem Gehäuse (1) über eine Schnappverbindung (45) gehaltert ist.

14. Steckarmatur nach Anspruch 12 oder 13, dadurch gekennzeichnet, daß der Haltering (43) auf seiner in Richtung der Einstecköffnung (3) in die Bohrung (2) ragenden Seite einen Außenkonus (46) aufweist, der mit einem Innenkonus (47) des Spannelementes (5) zum Lösen der Leitung (4) zusammenwirkt.

15. Steckarmatur nach einem oder mehreren der Ansprüche 1 bis 14, dadurch gekennzeichnet, daß das Gehäuse (1) an seinem der Einstecköffnung (3) gegenüberliegenden Ende ein Außengewinde (51) sowie einen sich an das Außengewinde (51) anschließenden Außensechskant (52) aufweist und in eine Gewindebohrung eines Anschlußteils unter Zwischenlage einer Ringdichtung (53) einschraubbar ist.

16. Steckarmatur nach einem oder mehreren der Ansprüche 1 bis 14, dadurch gekennzeichnet, daß das Gehäuse (1) eine zylindrische Außenfläche (55) aufweist und unter Einschluß einer Ringdichtung (56), die in einer Ringnut (57) des Gehäuses (1) angeordnet ist, in eine Paßbohrung (58) eines Anschlußteils (59) einsetzbar und durch eine Umbördelung (60) des Anschlußteils (59) befestigbar ist.

**Claims**

1. Socketless fitting for rapid and detachable coupling of a pipe and/or hose line (4) having an externally smooth end region, in particular a plastic line, said fitting comprising a housing (1) having a bore (2), one end of which forms an insert opening (3) for one end of the line (4), and having a sleeve-like clamping element (5), which is disposed so as to be axially displaceable inside the bore (2) of the housing (1) and has at its end (7) remote from the insert opening (3) radially inward-directed holding teeth (9) and is radially spring-resilient through at least one axial slot, the housing bore (2) having an inner cone (15) which, upon axial displacement of the clamping element (5) in the direction of the insert opening (3), cooperates with an outer cone (17) of the clamping element (5) to form a squeezing hold on the line (4), and the end of the clamping element (5) facing the insert opening (3) being sealed radially outwards against the wall of the bore (2) and radially inwards against the line (4) by means of a respective sealing ring (21 and 22), characterized in that the sealing rings (21, 22) are joined to the clamping element (5) through locking of their materials.

2. Socketless fitting according to claim 1, characterized in that the sealing rings (21, 22) are vulcanised onto the clamping element (5).

3. Socketless fitting according to claim 1 or 2, characterized in that each of the sealing rings (21, 22) has at least two annular rings (21a, 21b; 22a, 22b).

4. Socketless fitting according to one or several of claims 1 to 3, characterized in that the sealing rings (21, 22) are disposed offset in an axial direction relative to one another.

5. Socketless fitting according to one or several of claims 1 to 4, characterized in that the housing bore (2) has in its region adjacent to the insert opening (3) a sealing chamber (25) of increased diameter for accommodating the sealing rings (21, 22).

6. Socketless fitting according to one or several of claims 1 to 5, characterized in that the clamping element (5), which is preferably made of plastics or metal, comprises a carrier ring (11) disposed in the region of the insert opening (3) and a plurality of clamping arms (12) connected onto the carrier ring (11), separated from one another by axial slots and extending axially into the bore (2).

7. Socketless fitting according to claim 6, characterized in that the sealing rings (21, 22) are vulcanised onto the carrier ring (11) and preferably onto the clamping arms (12) in their region adjacent to the carrier ring (11) and are joined to one another through the slots located between the clamping arms (12).

8. Socketless fitting according to one or several of claims 1 to 7, characterized in that the housing (1) has in the region of the insert opening (3) a portion (31) with a cylindrical outer surface in which an annular groove (32) is formed, and that an annular cap (33) which encloses the line (4) is attachable onto the cylindrical portion (31), said cap having on its inner surface a ring land (34) which engages lockingly into the annular groove (32).

9. Socketless fitting according to claim 8, characterized in that the cap (33) is supported by means of an annular sealing lip (35) on the line (4).

10. Socketless fitting according to claim 8 or 9, characterized in that the cap (33) has on its external surface at least one operating handle (36).

11. Socketless fitting according to one or several of claims 1 to 10, characterized by an insert (41) preferably made of plastics which is force-and/or form-lockingly mounted in the housing bore (2) on its wider-diameter side opposite the insert opening (3) and has a cylindrical support sleeve (42) extending through the bore (2) at least as far as the insert opening (3) and having an external diameter which is slightly smaller than the internal diameter of the line (4).

12. Socketless fitting according to claim 11, characterized in that the support sleeve (42) on its side remote from the insert opening (3) passes radially outwards into a retaining ring (43), an annular hollow chamber (44) which is open towards the insert opening (3) being formed between the support sleeve (42) and the retaining ring (43) to accommodate the end of the line (4).

13. Socketless fitting according to claim 12, characterized in that the retaining ring (43) of the insert (41) is held in the housing (1) by means of a snap connection (45).

14. Socketless fitting according to claim 12 or 13, characterized in that the retaining ring (43) on its side projecting in the direction of the insert opening (3) into the bore (2) has an outer cone (46) which cooperates with an inner cone (47) of the clamping element (5) to release the line (4).

15. Socketless fitting according to one or several of claims 1 to 14, characterized in that the housing (1) has at its end opposing the insert opening (3) an external thread (51) and, adjacent thereto, an external hexagon (52) and can be screwed into a threaded bore of a connecting piece with an annular sealing element (53) interposed.

16. Socketless fitting according to one or several of claims 1 to 14, characterized in that the housing (1) has a cylindrical outer surface (55) and can be inserted, with the inclusion of an annular sealing element (56) disposed in an annular groove (57) of the housing (1), into a fitting bore (58) of a connecting piece (59) and fastened by means of a bead (60) on the connecting piece (59).

**Revendications**

1. Raccord embrochable pour une connexion rapide et détachable d'une conduite et/ou d'une conduite en tuyaux flexibles (4) avec une zone d'extrémité extérieure lisse, notamment en matière plastique, comprenant une enveloppe (1) avec un alésage (2), qui délimite, à une extrémité, une ouverture d'emmanchement (3) d'une extrémité de la conduite (4) et un élément de serrage (5) en forme de manchon disposé mobile dans le sens axial à l'intérieur du perçage (2) de l'enveloppe (1), élément de serrage qui comporte au niveau de son extrémité (7) opposée à l'ouverture d'emmanchement (3) des dents d'arrêt orientées radialement vers l'intérieur (9) et qui est radialement élastique grâce à au moins une fente axiale, l'alésage (2) de l'enveloppe présentant un cône intérieur (15), qui coopère avec une cône extérieur (17) de l'élément de serrage (5) lors d'un mouvement axial de l'élément de serrage (5) en direction de l'ouverture d'emmanchement (3) pour assurer une fixation serrée de la conduite (4), l'élément de serrage (5) étant rendu étanche au niveau de son extrémité orientée vers l'ouverture d'emmanchement (3) radialement vers l'extérieur contre la paroi de l'alésage (2) ainsi que radialement vers l'intérieur contre la conduite (4) à l'aide respectivement d'une bague d'étanchéité (21, 22), caractérisé en ce que les bagues d'étanchéité (21, 22) sont reliées à l'élément de serrage (5) avec verrouillage de leur matière.

2. Raccord embrochable selon la revendication 1, caractérisé en ce que les bagues d'étanchéité (21, 22) sont rendues solidaires de l'élément de serrage (5) par vulcanisation.

3. Raccord embrochable selon la revendication 1 ou 2, caractérisé en ce que les bagues d'étanchéité (21, 22) présentent au moins deux bourrelets annulaires (21a, 21b; 22a, 22b).

4. Raccord embrochable selon une ou plusieurs des revendications 1 à 3, caractérisé en ce que les bagues d'étanchéité (21,22) sont disposées décalées l'une par rapport à l'autre dans le sens axial.

5. Raccord embrochable selon une ou plusieurs des revendications 1 à 4, caractérisé en ce que l'alésage (2) de l'enveloppe présente, dans sa région qui est raccordée à l'ouverture d'emmenche- ment (3), une chambre étanche (25) de plus grand diamètre pour recevoir les bagues d'étanchéité (21, 22).

6. Raccord embrochable selon une ou plusieurs des revendications 1 à 5, caractérisé en ce que l'élément de serrage (5), de préférence en matière plastique ou en métal, est composé d'une bague de support (11) disposée à proximité de l'ouverture d'emmanchement (3) ainsi que de plusieurs bras de serrage (12) reliés avec la bague de support (11), séparés les uns des autres par des fentes axiales et s'étendant axialement dans l'alésage (2).

7. Raccord embrochable selon la revendication 6, caractérisé en ce que les bagues d'étanchéité (21, 22) sont rendues solidaires de la bague de support (11) ainsi que de préférence des bras de serrage (12) par vulcanisation, dans une zone raccordée à la bague de support (11) et sont reliées entre elles à travers les fentes situées entre les bras de serrage.

8. Raccord embrochable selon une ou plusieurs des revendications 1 à 7, caractérisé en ce que l'enveloppe (1) présente, à proximité de l'ouverture d'emmanchement (3), une partie (31) à surface extérieure cylindrique, dans laquelle est amenagée une rainure annulaire (32) et en ce que, sur la partie cylindrique (31), est rapporté un chapeau de fermeture annulaire (33) qui entoure la conduite (4) et qui comporte sur sa surface intérieure un gradin annulaire (34) qui s'engage dans la rainure annulaire (32).

9. Raccord embrochable selon la revendication 8, caractérisé en ce que le chapeau de fermeture (33) repose sur la conduite (4) par l'intermédiaire d'une lèvre d'étanchéité annulaire (35).

10. Raccord embrochable selon la revendication 8 ou 9, caractérisé en ce que le chapeau de fermeture (33) comporte au moins une poignée de manœuvre sur sa surface extérieure supérieure.

11. Raccord embrochable selon une ou plusieurs des revendications 1 à 10, caractérisé par une garniture (41) maintenue sans jeu ou de manière solidaire sur son côté de plus grand diamètre situé en face de l'ouverture d'emmanchement (3) dans l'alésage (2) de l'enveloppe, garniture qui comporte un manchon d'appui (42) s'étendant dans l'alésage (2) au moins jusqu'à l'ouverture d'emmanchement (3) et présentant un diamètre extérieur légèrement inférieur au diamètre intérieur de la conduite (4).

12. Raccord embrochable selon la revendication 11, caractérisé en ce que le manchon d'appui (42) passe de son côté détourné de l'ouverture d'emmanchement (3) radialement vers l'extérieur dans une bague de support (43), ce qui fait qu'il se forme entre le manchon d'appui (42) et la bague de support (43) un espace annulaire (44) ouvert en direction de l'ouverture d'emmanchement (3) pour recevoir l'extrémité de la conduite (4).

13. Raccord embrochable selon la revendication 12, caractérisé en ce que la bague de support (43) de la garniture (41) est maintenue dans l'enveloppe (1) par une fixation rapide (45).

14. Raccord embrochable selon la revendication 12 ou 13, caractérisé en ce que la bague de support (43) comporte sur son côté s'étendant dans l'alésage (2) en direction de l'ouverture d'emmanchement (3), un cône extérieur (46) qui coopère avec un cône intérieur (47) de l'élément de serrage (5) pour le déblocage de la conduite (4).

15. Raccord embrochable selon une ou plusieurs des revendications 1 à 14, caractérisé en ce que l'enveloppe (1) comporte à son extrémité située en face de l'ouverture d'emmanchement (3) un filetage extérieur (51) ainsi qu'un hexagone (52) raccordé au filetage extérieur (51) et peut être vissée dans un alésage fileté d'une pièce de raccordement avec l'interposition d'une bague d'étanchéité (53).

16. Raccord embrochable selon une ou plusieurs des revendications 1 à 14, caractérisé en ce que l'enveloppe (1) présente une surface extérieure cylindrique (55) et peut être engagée avec l'introduction d'un joint annulaire (56), qui est disposée dans une rainure annulaire (57) de l'enveloppe (1), dans un alésage de passage (58) d'une pièce de raccordement (59) et est fixée par un bord rabattu (60) de la pièce de raccordement (59).

FIG.1

FIG.2

EP 0 247 214 B1